# EUROPÄISCHE PATENTSCHRIFT

(11) **EP 1 200 866 B1**
(45) Veröffentlichungstag und Bekanntmachung des Hinweises auf die Patenterteilung: **19.03.2003**
(21) Anmeldenummer: 00956093.9
(22) Anmeldetag: 21.07.2000
(51) Int. Cl.: G02B 26/02

(54) **OPTISCHE KOPPLUNGSEINRICHTUNG**
OPTICAL COUPLING DEVICE
DISPOSITIF DE COUPLAGE OPTIQUE

(30) Priorität: 21.07.1999 DE 19934185
(43) Veröffentlichungstag der Anmeldung: 02.05.2002
(73) Patentinhaber: SCC Special Communication Cables GmbH & Co. KG, 81379 München (DE)
(72) Erfinder: RUEGENBERG, Gervin, D-80689 München (DE); ZIMMER, Frank, D-86937 Scheuring (DE)
(74) Vertreter: Viering, Jentschura & Partner
(86) Internationale Anmeldenummer: DE0002399
(87) Internationale Veröffentlichungsnummer: WO01007956

(56) Entgegenhaltungen:
- WO-A-98/13718
- US-A- 4 657 339
- US-A- 5 848 206

## Beschreibung

Die Erfindung betrifft eine optische Kopplungseinrichtung zum Einkoppeln von Licht zwischen zwei Lichtwellenleitern- Endflächen, wobei die geometrische Position der einen Lichtwellenleiter-Endfläche, beispielsweise einer Lichtleiterfaser, gegenüber der anderen Lichtwellenleiter-Endfläche, beispielsweise eines Streifenleiters eines optischen Bauelements, mit Hilfe eines längenveränderlichen Elements veränderbar ist, welches über eine Halteeinrichtung einen der beiden Lichtwellenleiter trägt und durch wenigstens einen Halteklotz mit der den anderen Lichtwellenleiter enthaltenden Struktur verbunden oder an ihr befestigt ist.

Eine optische Kopplungseinrichtung ist beispielsweise aus der WO 98/13718 bekannt. Derartige Kopplungseinrichtungen werden in optischen Filtern nach dem Phased-Array-Prinzip mit einer Einkoppelfläche eingesetzt, in die an einer bestimmten geometrischen Position Licht eintritt, wobei die geometrische Position die Ausgangswellenlänge des optischen Filters beeinflußt. Optische Filter nach dem Phased-Array-Prinzip werden insbesondere als Multiplexer oder Demultiplexer im optischen Wellenlängenmultiplex-Betrieb (WDM) eingesetzt, da sie eine geringe Einfügedämpfung und eine hohe Nebensprechunterdrükkung aufweisen.

In der deutschen Patentanmeldung DE 44 22 651.9 wird beschrieben, daß die Mittelwellenlänge eines Phased-Array-Filters durch die Position eines Einkoppel-Lichtwellen-leiters, der das Licht in den Lichtwellenleiter leitet, festgelegt werden kann. Auf diese Weise kann durch die geometrische Positionierung des Einkoppel-Lichtwellenleiters oder der Einkoppelfaser die Mittelwellenlänge des optischen Filters genau justiert werden.

Optische Kopplungseinrichtungen werden auch bei schmalbandigen Wellenlängen-Multiplexern (DWDM) für die Lichtwellenleiter-Übertragungstechnik eingesetzt. Diese Bauteile ermöglichen es, auf der Senderseite die Signale von Lasern verschiedener Wellenlängen verlustarm auf eine einzige Glasfaser zusammenzuführen beziehungsweise auf der Empfängerseite wellenlängenselektiv auf eine entsprechende Anzahl von Empfängern aufzuteilen.

Der besondere Vorteil von schmalbandigen Wellenlängen-Multiplexern im Vergleich zu herkömmlichen Wellenlängen-Multiplexern liegt in der Schmalbandigkeit. Dadurch ist ein so geringer Kanalabstand möglich, daß im Dämpfungsminimum der Glasfaser, das heißt im Wellenlängenbereich um 1550 nm, eine Vielzahl von Übertragungskanälen, beispielsweise zweiunddreißig Übertragungskanäle, untergebracht werden kann. Ein DWDM besteht aus einem Chip, auf dem Wellenleiterstrukturen mit der erforderlichen Geometrie aufgebracht sind. Auf der Empfängerseite ist der Eingang des Chips die Faser mit dem Multiplexersignal, die auch Einkopplungsfaser genannt wird. Auf der Auskopplungsseite ist eine entsprechende Anzahl von Fasern angebracht, die die einzelnen Signale zu dem Empfängern weiterführen.

Bei der Lichtwellenleiter-Übertragungstechnik mit DWDM besteht das Problem darin, daß die Eigenschaften des Chips sich mit der Betriebstemperatur stark ändern. Eine Temperaturänderung führt zu einer Änderung der Brechzahlverhältnisse und auch der geometrischen Verhältnisse der Chips. Dadurch kommt es zu Verschiebungen der Wellenlänge, das heißt zu einer Verschiebung des Kanalastes zwischen DWDM und den Lasern beziehungsweise zwischen der Senderseite und der Empfängerseite. Aus diesem Grund muß die Verschiebung der Mittenwellenlängen vermieden werden.

Zur Vermeidung der beschriebenen Temperatureffekte wurde bereits eine passive Temperaturkompensation vorgeschlagen. Die Temperaturabhängigkeit der Mittenwellenlänge kann dadurch kompensiert werden, daß die Einkoppelfaser in Abhängigkeit von der Temperatur gegenüber dem DWDM-Chip vertikal verschoben wird. Diese Verschiebung erfolgt durch ein längenveränderliches Bauteil, welches gegenüber dem Trägermaterial des Chips einen höheren termischen Ausdehnungskoeffizienten aufweist, beispielsweise durch ein längenveränderliches Element aus Aluminium. An dem längenveränderlichen Element ist dann, wie eingangs beschrieben wurde, die Lichtleiterfaser befestigt, so daß die Endflächen der Lichtleiterfaser und des Lichtleiterchips parallel zueinander verschoben werden, wodurch der Einfluß der Temperatur auf die Mittenwellenlänge kompensiert wird.

Bei der praktischen Umsetzung dieser Kopplungseinrichtung werden die Verbindungsstellen zwischen dem Halteklotz und dem Chip einerseits und dem Halteklotz und dem längenveränderlichen Element andererseits in Klebetechnik ausgeführt. Dabei wird die Klebestelle zwischen dem Halteklotz und dem Chip ausgehärtet, nachdem die Einkoppelfaser optisch relativ zum Chip positioniert ist.

Bei dieser Technik ergibt sich das Problem, daß die Klebeverbindungen temperaturabhängigen Änderungen unterliegen. Durch unterschiedliche Klebespaltbreiten, Inhomogenitäten und Ausgasung des Klebers kommt es zu mechanischen Spannungen im Spalt. Dies ist besonders kritisch bei Klebeverbindungen zwischen Materialien mit unterschiedlichen Temperaturausdehnungskoeffizienten, wie Aluminium und Glas oder Glaskeramik. Die thermisch bedingten Spannungen haben zur Folge, daß eine Temperaturänderung nicht nur die erwünschte Bewegung der Endflächen der Lichtleiterelemente zueinander, sondern zusätzlich auch dazu senkrechte Bewegungen erfolgen, das heißt senkrecht zur Chipebene oder von dem Chip weg. Diese Bewegungen sind unerwünscht, da sie zu einer Erhöhung der Dämpfung an der Einkopplungsstelle führen. Die unerwünschten Bewegungen lassen sich wenigstens teilweise durch eine Fixierung des freien Endes des längenveränderlichen Elementes verhindern, wobei jedoch die Befestigung so ausgestaltet sein muß, daß die erwünschte temperaturabhängige Bewegung zugelassen wird.

Es wurde bereits vorgeschlagen, eine verschiebbare Führung an dem anderen Halteklotz vorzusehen. Diese Art der Fixierung erfordert jedoch sehr enge Bearbeitungstoleranzen der Bauteile und einen hohen feinmechanischen Aufwand. Dennoch treten Probleme durch Reibung und Spiel in der Führung auf.

Demgegenüber liegt der Erfindung die Aufgabe zugrunde, eine optische Kopplungseinrichtung bereitzustellen, bei der Bewegungen der Endfläche der Lichtleiterfaser senkrecht zu dieser Fläche zu unterdrücken und gleichzeitig die erwünschte Bewegung der Endflächen parallel zueinander zu gestatten. Insbesondere soll eine optische Kopplungseinrichtung bereitgestellt werden, die mit den etablierten Herstellungs- und Klebeverfahren kompatibel ist und eine Justierung der Einkoppelstelle vor dem Kleben ermöglicht.

Zur Lösung dieser Aufgabe dient eine optische Kopplungseinrichtung gemäß Anspruch 1.

Das längenveränderliche Element, das beispielsweise aus Aluminium bestehen kann, wird bei dieser Ausführungsform der Erfindung mit einem Ausgleichselement aus einem Material mit negativem Ausdehnungskoeffizienten verlängert, so daß sich in der Summe die gleiche Wärmeausdehnung ergibt, wie bei dem Trägermaterial, beispielsweise Quarzglas. Dadurch wird erreicht, daß sich zwar die Einkoppelfasern in der gewünschten Art und Weise verschiebt, das heißt die Endfläche der Einkoppelfaser bewegt sich parallel zu der Einkoppelfläche des Chips, daß jedoch keine Relativbewegung zwischen den Befestigungspunkten der beiden Halteklötze und dem Trägermaterial, das heißt dem Chip, stattfindet, weil die Gesamtlänge von längenveränderlichem Element und längenveränderlichem Ausgleichselement immer gleich groß ist. Damit werden die oben beschriebenen Spannungen und Verschiebungen minimiert.

Eine weitere vorteilhafte Ausgestaltung der erfindungsgemäßen Einrichtung ist dadurch gekennzeichnet, daß die Länge des längenveränderlichen Ausgleichselementes unter Berücksichtigung von dessen Ausdehnungskoeffizienten so gewählt ist, daß sich die Länge des längenveränderlichen Ausgleichselementes um den gleichen Betrag, aber in entgegengesetztem Sinne wie die des längenveränderlichen Elements verändert. Mit anderen Worten kommt es nur auf die Kombination der Einflüsse der Länge des Ausgleichselementes und dessen Ausdehnungskoeffizienten an, so daß eine genaue Abstimmung des Ausdehnungskoeffizienten nicht erforderlich ist.

Zur Lösung der oben genannten Aufgabe dient eine optische Kopplungseinrichtung gemäß Anspruch 5. Diese Kopplungseinrichtung wird mit Hilfe des U-förmigen Teiles an dem Chip befestigt beziehungsweise verklebt. Durch die gleichartigen Wärmeausdehnungen der drei durch die längenveränderlichen Elemente und das U-förmige und das T-förmige Teil gebildeten Säulen wird erreicht, daß eine feste Verklebung der einzelnen Teile möglich wird, ohne daß die Verbindungsstellen durch Temperaturdehnungen beansprucht werden. Damit wird in vorteilhafter Weise erreicht, daß die Einkoppelfaser den auf die erwünschte temperaturabhängige Bewegungen ausführen kann. Durch die zusätzlichen Teile wird die erwünschte Fixierung des oberen Endes des längenveränderlichen Elementes erreicht, so daß sich temperatur- und zeitabhängige Veränderungen der Klebestelle zwischen dem U-förmigen Teil und den längenveränderlichen Elementen nur noch minimal auswirken können. Nur noch der U-förmige Teil ist mit dem Chip verbunden beziehungsweise verklebt und alle anderen Teile sind frei beweglich und können sich somit bei schwankenden Temperaturen und entsprechender Ausdehnung der längenveränderlichen Elemente mit positivem Temperaturausdehnungenkoeffizienten verschieben.

Eine weitere vorteilhafte Ausgestaltung der erfindungsgemäßen Einrichtung ist dadurch gekennzeichnet, daß die längenveränderlichen Elemente aus Aluminium bestehen, was wegen seiner Materialeigenschaften für diesen Zweck bevorzugt ist.

Schließlich ist eine weitere vorteilhafte Ausgestaltung der erfindungsgemäßen Einrichtung dadurch gekennzeichnet, daß das Material der längenveränderlichen Ausgleichselemente eine Glaskeramik mit negativem Temperaturausdehnungskoeffizienten, vorzugsweise das Material des Chips, ist. Damit wird ein mininaler Einfluß von Temperaturänderungen zwischen Chip und Halteklotz erreicht.

Ausführungsbeispiele der Erfindung werden anhand der beiliegenden Zeichnungen beschrieben. Es zeigen:
- Fig. 1: eine Seitenansicht einer Kopplungseinrichtung gemäß einem ersten Ausführungsbeispiel der Erfindung;
- Fig. 2: eine Draufsicht auf ein zweites Ausführungsbeispiel der erfindungsgemäßen Kopplungseinrichtung mit Blickrichtung nach dem Pfeil B in Figur 3; und
- Fig. 3: eine Seitenansicht des zweiten Ausführungsbeispiels der erfindungsgemäßen Kopplungseinrichtung.

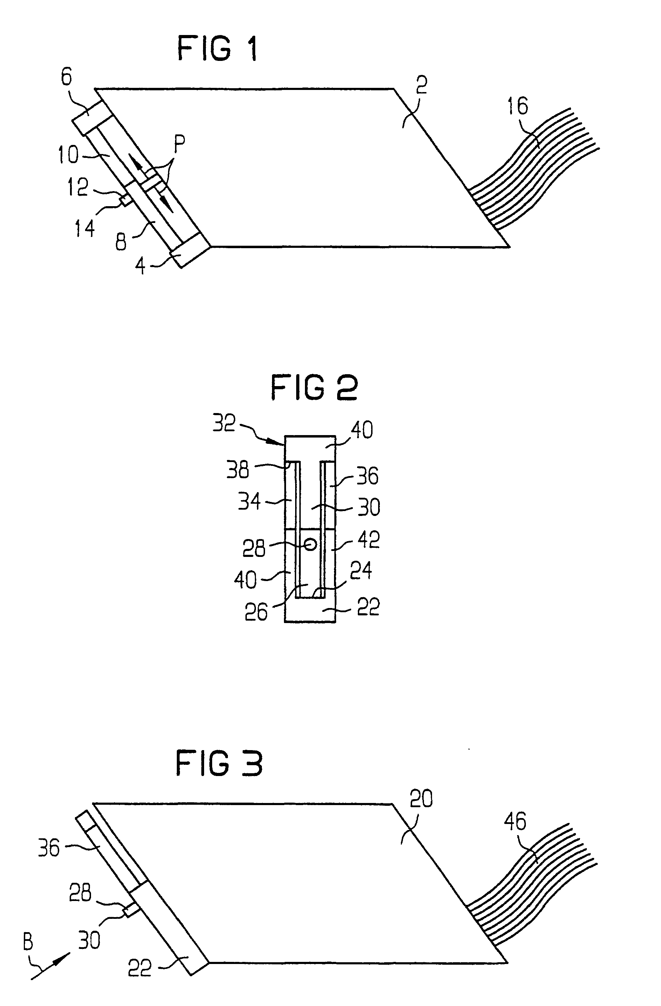

In Figur 1 ist ein Lichtwellenleiterchip 2 gezeigt, an dem über zwei Halteklötze 4, 6 (z.B. Glas oder Glaskeramik) ein längenveränderliches Element 8 aus Aluminium, ein längenveränderliches Ausgleichselement 10 aus einem Material mit negativem Wärmeausdehnungskoeffizienten und eine Ferrule 12 gehalten wird, durch das eine Lichtleiterfaser 14 in Einkopplungsstellung an dem Lichtleiterchip 2 gehalten wird. Das Ferule 12 bewegt sich in Richtung des Doppelpfeiles P.

Bei dieser Ausführungsform wird mit anderen Worten das längenveränderliche Element 8 durch ein längenveränderliches Ausgleichselement 10 verlängert, so daß sich in der Summe die gleiche Wärmeausdehnung ergibt, wie bei dem Trägermaterial des Lichtwellenleiterchips, nämlich bei Quarzglas. Dadurch wird erreicht, daß sich bei Temperaturänderungen die Einkoppelfaser in der gewünschten Weise verschiebt, um die Mittenwellenlänge zu kompensieren, daß jedoch keine Relativbewegung zwischen den Befestigungspunkten der Halteklötze 4, 6 und dem Lichtwellenleiterchip 2 stattfindet.

Mögliche Glaskeramikmaterialien, die einen negativen Temperaturausdehnungskoeffizienten aufweisen, sind unter dem Namen ROBAX® oder CERODUR® erhältlich. Da die Beträge der Ausdehnungskoeffizienten dieser Materialien im Vergleich zu dem Temperaturausdehnungskoeffizienten des längenveränderlichen Elementes 8 aus Aluminium unterschiedlich sind, wird die Länge des Ausgleichselementes 10 so angepaßt, daß sich insgesamt eine Wärmeausdehnung ergibt, wie bei dem Trägermaterial Quarzglas.

Auf der der Einkopplungsseite gegenüberliegenden Seite des Lichtwellenleiterchips 2 sind die Auskopplungsfasern 16 dargestellt.

Die Figuren 2 und 3 zeigen eine Draufsicht beziehungsweise eine Seitenansicht eines zweiten Ausführungsbeispieles der erfindungsgemäßen Kopplungseinrichtung, wobei die Figur 2 in Blickrichtung des Pfeiles B von Figur 3 zu sehen ist. Bei diesem Ausführungsbeispiel ist ein U-förmiges Teil 22 als Halteklotz der Kopplungseinrichtung an einem Lichtwellenleiterchip 20 vorgesehen. An dem Boden 24 des U-förmigen Teiles ist das längenveränderliche Element 26 befestigt, welches die Ferule 28 trägt, in der die Faser 30 befestigt ist. Das andere Ende des längenveränderlichen Elementes 26 ist an dem Fuß 30 eines T-förmigen Teiles 32 befestigt. Zwei weitere längenveränderliche Elemente 34, 36 sind an der Unterseite 38 des Querbalkens 40 des T-förmigen Elementes 32 befestigt und andererseits an den Enden von Schenkeln 40, 42 des U-förmigen Teiles 22. Bei diesem Ausführungsbeispiel sind die längenveränderlichen Teile 26, 34, 36 aus Aluminium, das einen positiven Wärmeausdehnungskoeffizienten hat, und das T-förmige Teil 32 und das U-förmige Teil 33 sind aus Glaskeramik, vorzugsweise aus dem gleichen Material wie der Lichtwellenleiterchip 20, das den gleichen Wärmeausdehnungskoeffizienten aufweist wie der Lichtwellenleiterchip.

Durch diesen Aufbau ergeben sich drei "Säulen", die jeweils zur Hälfte aus Aluminium und Glasmaterial bestehen. Dadurch haben alle drei "Säulen" jeweils die gleiche Gesamt-Temperaturausdehnung. Somit ist eine feste Verklebung der einzelnen Teile möglich, ohne daß die Verbindungsstellen durch Tempera-turdehnung beansprucht werden. Durch die zusätzlichen Teile wird die erwünschte Fixierung des oberen Endes des längenveränderlichen Elementes 26 erreicht, so daß sich temperaturund zeitabhängige Veränderungen der Klebestelle zwischen dem U-förmigen Teil 22 und dem längenveränderlichen Element 26 nicht mehr auswirken. Lediglich der U-förmige Teil 22 ist mit dem Lichtwellenleiterchip 20 verbunden beziehungsweise daran verklebt. Alle anderen Teile der Kopplungseinrichtung sind frei beweglich und können sich somit bei schwankenden Temperaturen entsprechender Ausdehnung der längenveränderlichen Elemente verschieben. Auskopplungsfasern 46 sind wiederum an der Auskopplungsseite des Lichtwellenleiterchips 20 gezeigt.

## Patentansprüche

1. Optische Kopplungseinrichtung zum Einkoppeln von Licht zwischen zwei Lichtwellenleiter-Endflächen, wobei die geometrische Position der einen Lichtwellenleiter-Endfläche, beispielsweise einer Lichtleiterfaser (14), gegenüber der anderen Lichtwellenleiter-Endfläche, beispielsweise eines Lichtleiterchips (2), mit Hilfe eines thermisch längenveränderlichen Elements (8) veränderbar ist, welches an einem ersten Ende über eine Halteeinrichtung (12) den einen der beiden Lichtwellenleiter trägt und am anderen Ende durch wenigstens einen Halteklotz (4) an dem anderen Lichtwellenleiter befestigt ist, **dadurch gekennzeichnet, daß** das längenveränderliche Element (8) am ersten Ende mit einem ersten Ende eines längenveränderlichen Ausgleichselements (10) verbunden ist, dessen Länge sich mit der Temperatur um den gleichen Betrag, aber in entgegengesetztem Sinne wie die des längenveränderlichen Elementes (8) verändert, und daß das längenveränderliche Ausgleichselement (10) am anderen Ende an einem anderen Halteklotz (6) befestigt ist.

2. Kopplungseinrichtung nach Anspruch 1, **dadurch gekennzeichnet, daß** die Länge des längenveränderlichen Ausgleichselementes (10) unter Berücksichtigung von dessen Ausdehnungskoeffizienten so gewählt ist, daß sich die Länge des längenveränderlichen Ausgleichselementes (10) um den gleichen Betrag, aber in entgegengesetztem Sinne wie die des längenveränderlichen Elements (8) verändert.

3. Optische Kopplungseinrichtung nach Anspruch 1 oder 2, **dadurch gekennzeichnet, daß** das längenveränderliche Element (8) aus Aluminium ist.

4. Kopplungseinrichtung nach einem der Ansprüche 1 bis 3, **dadurch gekennzeichnet, daß** das Material des längenveränderlichen Ausgleichselements (10) eine Glaskeramik ist.

5. Optische Kopplungseinrichtung zum Einkoppeln von Licht zwischen zwei Lichtwellenleiter-Endflächen, wobei die geometrische Position der einen Lichtwellenleiter-Endfläche, beispielsweise einer Lichtleiterfaser (14), gegenüber der anderen Lichtwellenleiter-Endfläche, beispielsweise eines Lichtleiterchips (2), mit Hilfe eines ersten, thermisch längenveränderlichen Elements (26) veränderbar ist, welches an einem ersten Ende über eine Halteeinrichtung (28) den einen der beiden Lichtwellenleiter trägt und am anderen Ende durch wenigstens einen Halteklotz an dem anderen Lichtwellenleiter befestigt ist, **dadurch gekennzeichnet, daß** der Halteklotz ein U-förmiges Teil (22) aus einem Material mit gleichem Wärmeausdehnungskoeffizienten aufweist wie der andere Lichtwellenleiter, daß ein T-förmiges Teil (32) aus einem Material mit gleichem Temperaturausdehnungskoeffizienten wie der andere Lichtwellenleiter vorgesehen ist, daß das erste längenveränderliche Element (26) einen größeren positiven Temperaturausdehnungskoeffizienten aufweist und mit einem Ende mit dem T-förmigen Teil (32) an dessen Fuß (30) und mit dem anderen Ende mit dem U-förmigen Teil (22) an dessen Boden (24) verbunden ist, und daß zwei weitere längenveränderliche Elemente (34, 36), die aus dem gleichen Material bestehen wie das erste längenveränderliche Element (26) und die gleiche Länge wie dieses haben und die einerseits an den Enden der Schenkel (40, 42) des U-förmigen Teils (22) und andererseits an der Unterseite (38) des Querbalkens (40) des T-förmigen Teiles (32) befestigt sind.

6. Kopplungseinrichtung nach Anspruch 5, **dadurch gekennzeichnet, daß** die längenveränderlichen Elemente (26, 34, 36) aus Aluminium bestehen.

7. Kopplungseinrichtung nach Anspruch 5 oder 6, **dadurch gekennzeichnet, daß** das Material des U-förmigen Teils (22) und des T-förmigen Teils (32) eine Glaskeramik ist, vorzugsweise gleich dem Material des anderen Lichtwellenleiters ist.

## Claims

1. Optical coupling device for coupling light in between two optical waveguide end faces, the geometric position of the one optical waveguide end face, for example of an optical fibre (14), being capable of being varied with respect to the other optical waveguide end face, for example of an optical waveguide chip (2), with the aid of a thermally variable-length element (8), which at a first end carries one of the two optical waveguides via a holding device (12) and at the other end is fixed to the other optical waveguide by means of at least one holding block (4), **characterized in that** at the first end the variable-length element (8) is connected to a first end of a variable-length compensating element (10), whose length changes with temperature by the same amount but in the opposite sense as that of the variable-length element (8), and **in that** the variable-length compensating element (10) is fixed to another holding block (6) at the other end.

2. Coupling device according to Claim 1, **characterized in that** the length of the variable-length compensating element (10) is selected, taking its coefficient of expansion into account, such that the length of the variable-length compensating element (10) changes by the same amount but in the opposite sense as that of the variable-length element (8).

3. Optical coupling device according to Claim 1 or 2, **characterized in that** the variable-length element (8) is made of aluminium.

4. Coupling device according to one of Claims 1 to 3, **characterized in that** the material of the variable-length compensating element (10) is a glass ceramic.

5. Optical coupling device for injecting light between two optical waveguide end faces, the geometric position of one optical waveguide end face, for example of an optical fibre (14), being capable of being varied with respect to the other optical waveguide end face, for example of an optical waveguide chip (2), with the aid of a first thermally variable-length element (26), which carries at a first end one of the two optical waveguides via a holding device (28) and at the other end is fixed to the other optical waveguide by means of at least one holding block, **characterized in that** the holding block has a U-shaped part (22) made of a material with the same coefficient of thermal expansion as the other optical waveguide, **in that** a T-shaped part (32) made of a material with the same coefficient of thermal expansion as the other optical waveguide is provided, **in that** the first variable-length element (26) has a greater positive coefficient of thermal expansion and with one end is connected to the T-shaped part (32) at its foot (30) and with the other end to the U-shaped part (22) at its base (24), and **in that** two further variable-length elements (34, 36) which consist of the same material as the first variable-length element (26) and have the same length as the latter and which, on one side, are fixed to the ends of the legs (40, 42) of the U-shaped part (22) and, on the other side, to the underside (38) of the crossbar (4) of the T-shaped part (32).

6. Coupling device according to Claim 5, **characterized in that** the variable-length elements (26, 34, 36) consist of aluminium.

7. Coupling device according to Claim 5 or 6, **characterized in that** the material of the U-shaped part (22) and of the T-shaped part (32) is a glass ceramic preferably the same as the material of the other optical waveguide.

## Revendications

1. Dispositif de couplage optique pour réaliser un couplage de la lumière entre deux surfaces d'extrémité de guide d'ondes, moyennant quoi la position géométrique d'une surface d'extrémité de guide d'ondes, par exemple une fibre optique (14), par rapport à l'autre surface d'extrémité de guide d'ondes, par exemple un substrat du guide d'ondes (2), peut être modifiée à l'aide d'un élément de longueur variable par voie thermique (8), qui, à une première extrémité, porte l'un des deux guides d'ondes par l'intermédiaire d'un dispositif de maintien (12) et, à l'autre extrémité, est fixé par l'intermédiaire d'au moins un bloc de maintien (4) à l'autre guide d'ondes, **caractérisé en ce que** l'élément de longueur variable (8), au niveau de la première extrémité, est relié à une première extrémité d'un élément de compensation de longueur variable (10), dont la longueur varie avec la température dans la même mesure mais dans le sens opposé par rapport à l'élément de longueur variable (8), et **en ce que** l'élément de compensation de longueur variable (10) est fixé à un autre bloc de maintien (6) au niveau de l'autre extrémité.

2. Dispositif de couplage selon la revendication 1, **caractérisé en ce que** la longueur de l'élément de compensation de longueur variable (10) est choisie en tenant compte de son coefficient de dilatation, de telle sorte que la longueur de l'élément de compensation de longueur variable (10) varie dans la même mesure mais dans le sens opposé par rapport à l'élément de longueur variable (8).

3. Dispositif de couplage optique selon la revendication 1 ou 2, **caractérisé en ce que** l'élément de longueur variable (8) est réalisé en aluminium.

4. Dispositif de couplage selon l'une quelconque des revendications 1 à 3, **caractérisé en ce que** le matériau de l'élément de compensation de longueur variable (10) est de la céramique de verre.

5. Dispositif de couplage optique pour réaliser un couplage de la lumière entre deux surfaces d'extrémité de guide d'ondes, moyennant quoi la position géométrique d'une surface d'extrémité de guide d'ondes, par exemple une fibre optique (14), par rapport à l'autre surface d'extrémité de guide d'ondes, par exemple un substrat du guide d'ondes (2), peut être modifiée à l'aide d'un premier élément de longueur variable (26) par voie thermique, qui, à une première extrémité, porte l'un des deux guides d'onde par l'intermédiaire d'un dispositif de maintien (28) et, au niveau de l'autre extrémité, est fixé par l'intermédiaire d'au moins un bloc de maintien à l'autre guide d'ondes, **caractérisé en ce que** le bloc de maintien présente un élément en forme de U (22) réalisé dans un matériau ayant le même coefficient de dilatation thermique que l'autre guide d'ondes, **en ce qu'**il est prévu un élément en forme de T (32) réalisé dans un matériau ayant le même coefficient de dilatation thermique que l'autre guide d'ondes, **en ce que** le premier élément de longueur variable (26) présente un coefficient de dilatation thermique positif supérieur et qui est relié avec une extrémité à l'élément en forme de T (32) au niveau de son pied (30) et est relié avec son autre extrémité à l'élément en forme de U (22) au niveau de son fond (24), et **en ce qu'**on prévoit deux autres éléments de longueur variable (34, 36), qui sont réalisés dans le même matériau que le premier élément de longueur variable (26) et ont la même longueur que ce dernier et sont fixés d'une part aux extrémités des côtés (40, 42) de l'élément en forme de U (22) et d'autre part au niveau du côté inférieur (38) de la barre transversale (40) de l'élément en forme de T (32).

6. Dispositif de couplage selon la revendication 5, **caractérisé en ce que** les éléments de longueur variable (26, 34, 36) sont réalisés en aluminium.

7. Dispositif de couplage selon la revendication 5 ou 6, **caractérisé en ce que** le matériau de l'élément en forme de U (22) et de l'élément en forme de T (32) est de la céramique de verre, de préférence le même matériau que l'autre guide d'ondes.
